# EUROPEAN PATENT SPECIFICATION

(11) **EP 0 730 895 B1**
(45) Date of publication and mention of the grant of the patent: **06.09.2000**
(21) Application number: 96200551.8
(22) Date of filing: 01.03.1996
(51) Int. Cl.: B01D 24/30, B01D 24/46, B01D 24/48

(54) **Filter device**
Filtriervorrichtung
Appareil de filtration

(30) Priority: 03.03.1995 NL 9500428
(43) Date of publication of application: 11.09.1996
(73) Proprietor: ASTRACO BEHEER B.V., 2172 JB Sassenheim (NL)
(72) Inventor: Assen, Harry, 2172 JB Sassenheim (NL)
(74) Representative: Hoorweg, Petrus Nicolaas

(56) References cited:
- EP-A- 0 180 495
- EP-A- 0 560 215
- WO-A-93/00977
- US-A- 1 644 469

## Description

The invention relates to a device for filtering a contaminated liquid, such as industrial waste water or groundwater, comprising a standing vessel, the lower part of which has a downward narrowing inner wall, which vessel serves to receive a filter bed, for instance in the form of a sand bed, in addition to a pump tube which stands in the filter bed and has arranged therein a stand pipe fed with a gaseous medium such as air, a screen supported by the tube and lying in the filter bed and having a peripheral edge ending at a distance from the inner wall of the vessel, and a tube assembly debouching above the screen for supplying the water for filtering.

A filtering device as such is disclosed in EP-A-0 180 495.

With such a filter the sand bed must be regularly cleaned, this taking place with the air pump which carries the granules upward from the filter bed and then washes off the adhered contamination. This is a continuous process and the device can be used continuously. It has been found in practice however that the filter bed, as seen in a horizontal cross-section of the vessel, does not everywhere flow through uniformly as a result of internal resistances. This local through-flow of the filter bed causes blockages in other locations and therefore causes the device to function less well.

The invention has for its object to obviate the above stated drawbacks and provides for this purpose a device which is distinguished in that the tube is provided with two groups of centering members which are arranged one above the other and which support on the inclining inner wall of the lower part of the vessel.

Tests have shown that, irrespective of the resistance in the filter bed, the centering of the screen relative to the inner wall of the vessel and the centering of the debouchment on the underside of the pump are extremely important for a uniform removal of the filter bed on the underside and therefore for a uniform through-flow of the filter bed as a whole. Using this centering, defects in the construction can also be offset since the tube part between the screen and the bottom end can easily adapt to this centering by setting and does not in fact have any adverse effect on the efficiency of the filter device.

In this first embodiment the centering means are directly coupled to the screen so that the peripheral edge thereof has a practically fixed distance relative to the inner wall of the vessel. This reduces the effect of construction faults still further and ensures a uniform through-flow of the filter bed through the slit-shaped space between screen and inner wall. The filter bed is in fact displaced uniformly herewith as seen over the entire horizontal section.

In another embodiment centering of the bottom end of the tube can take place by changing the length of the lower group of centering members extending between the tube and the inner wall, so that the bottom end of the tube is adjustable transversely of the longitudinal axis of the vessel. These centering members can be embodied as screw spindles which can be operated from the outside of the vessel.

According to a further embodiment it is also possible to embody the narrowed bottom end of the vessel as a separate part which is adjustable transversely of the longitudinal axis of the vessel by means of a coupling flange and can thus be placed centred round the bottom end of the tube.

In order to offset possible adverse effects of an asymmetrical position of the pump pipe relative to the centre line of the vessel and the distance to the inner wall thereof, the invention further proposes to adjust the stand pipe in radial sense relative to the lower end of the pump tube, whereby an asymmetrical arrangement of the stand pipe can be arranged intentionally in order to enable equalization of asymmetrical flow patterns resulting from construction faults.

The invention is further elucidated in the figure description of an embodiment hereinbelow. In the drawing:
fig. 1 shows a standing cross-section of a filter device according to the invention,
fig. 2 and 3 show a standing cross-section corresponding with fig. 1 of the bottom end of the filter device according to the invention, which sections give two alternative centering options,
fig. 4 shows a standing section of a detail of the washing device of fig. 1.

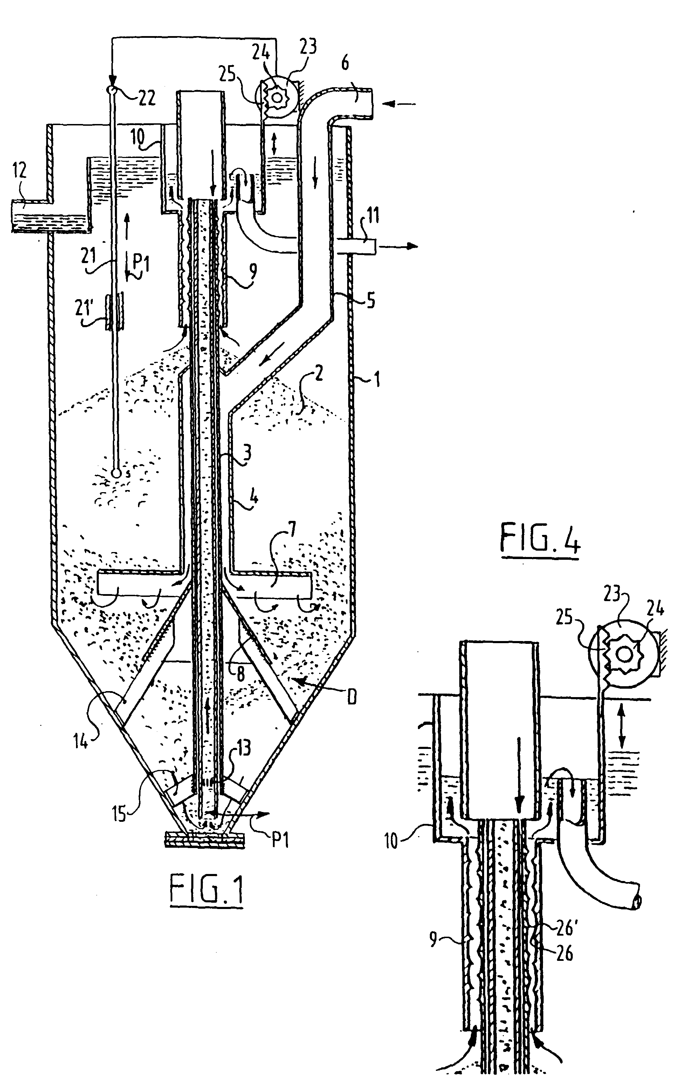

Designated in fig. 1 with the numeral 1 is the vessel in which a filter bed 2 is arranged. The vessel consists of a cylindrical portion and a conical portion connecting thereunder, wherein the top of the vessel is open. Arranged in the middle of vessel 1 is a double-walled tube 3, the inner tube of which protrudes into the tip of the conical portion of the vessel 1, while the outer tube ends at a distance thereabove. At the top the tubes are mutually connected to form a closed space between the inner and outer tube. Halfway along the height of the vessel 1 a tubular jacket 4 is arranged co-axially around the double-walled tube 3, the top end of which jacket is connected to a feed tube 5 for the liquid for cleaning which is supplied at 6. Connected to the underside of the jacket 4 in star shape is a plurality of channels 7 which in cross section form an upside down U, so that the underside thereof is open.

A conical screen 8 is further placed round the double-walled tube 3 on the underside of jacket 4.

Jacket 4 can of course connect onto a perforated or non-perforated conical screen at a distance above screen 8 for uniform distribution of the waste water supplied through jacket 4.

Above jacket 4 a second jacket 9 is fitted round the double-walled tube 3, the bottom end of which is open and the top end of which debouches into a tank 10, the upper edge of which lies at the same height as that of the vessel 1. In the bottom of the tank a tube 11 protrudes upward into the tank 10 and runs downward through the wall of the vessel 1 to the outside.

An outlet 12 is further arranged in the upper part of the vessel 1 for the cleaned water.

According to the invention centering means are arranged round the bottom end of the thin-walled tube 3 in order to place this latter accurately relative to the conical bottom end of vessel 1. These centering means consist of strips 14 which lie mutually in line with conical screen 8 and the ends of which support on the inner wall of the conical bottom end of vessel 1. A second pair of strips 15 is further arranged which are fixed to the bottom end of the outer tube 3 and likewise support on the conical bottom end. Since the longitudinal dimensioning of strips 14 and 15 can be embodied in simple manner this ensures that the annular passage D between screen 8 and the inner wall of vessel 1 is the same size everywhere, whereby the filter material is taken up uniformly everywhere above the screen 8.

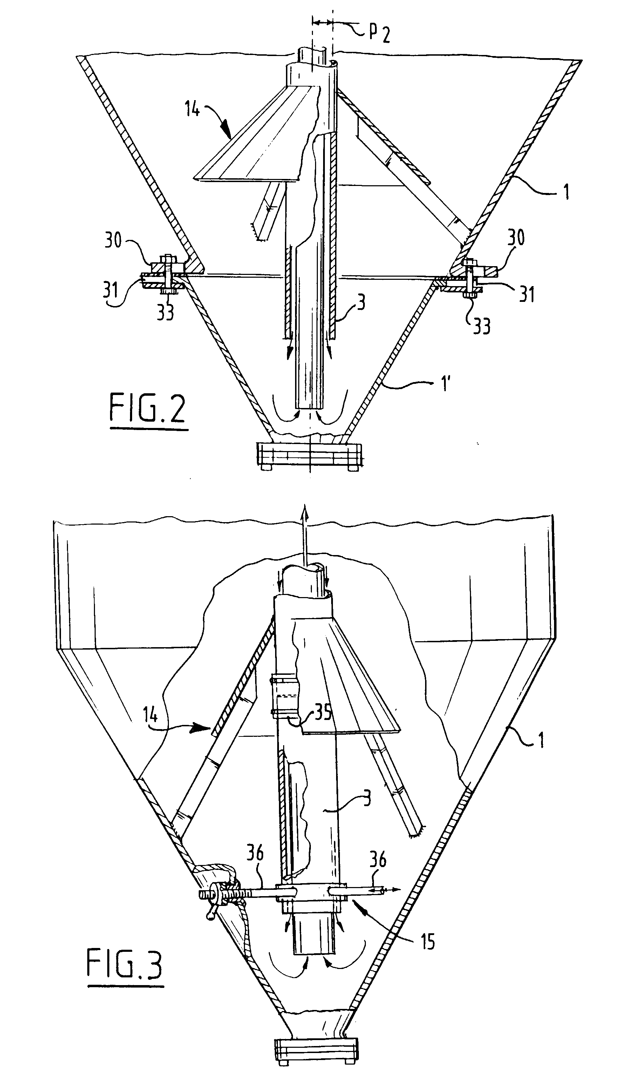

Shown in detail in fig. 2 is the bottom end of the vessel, which bottom end has a separate part 1'. This separate component 1' is coupled by means of a flange 30 to a flange 31 on the upper part of vessel 1, wherein the flanges are embodied with slotted holes such that the bolts 33 placed therethrough can make a sideways movement relative to the vertical longitudinal axis of the vessel. This sideward movement is designated with arrow P2. It is thus possible to centrally adjust the lower part 1' relative to the bottom end of the tube 3.

Fig. 3 shows a cross section corresponding with fig. 2 wherein the vessel is an integrated whole but wherein the tube 3 is embodied with a flexible coupling 35 situated under the upper centering members 14. The bottom end of tube 3 is provided with a screw spindle 36, two of which are for instance arranged perpendicularly of each other and which can be operated from outside the vessel 1. The length of the centering member 15 can be changed with the screw spindle, whereby the bottom end of tube 3 can be centrally adjusted relative to the bottom end of vessel 1.

It is possible according to the invention to adjust the inner tube relative to the outer tube of the double-walled pump 3 in radial sense as according to arrow P1. An asymmetrical discharge of filter material in the bottom of the conical portion of vessel 1 can be realized therewith, which may be a possible correction for an asymmetrical supply of that material along the strip 15.

The radial adjustment of the inner tube can take place by rotating this latter relative to the outer tube, wherein this inner tube intentionally stands "out of plumb" or is arranged in an eccentric ring between inner and outer tube.

The filter device as described above operates as follows:

The granular filter bed of for instance sand extends to above the jacket 4 and beneath the jacket 9.

The liquid for cleaning, for example waste water, is fed into the tube 5 at 6, whereafter it sinks downward to the star-shaped channels 7 where it disperses over the horizontal cross section of vessel 1 and filter bed 2. The water is then filtered in upward flow by the granular filling and is carried away out of vessel 1 at the top via outlet 12. By supplying a quantity of air into the space between both tubes of the double-walled tube 3, this air will flow upward into the inner tube at the bottom via slits 13, carrying with it the granulated material from filter bed 2. This material is there washed in the upward movement and will flow out above the double-walled tube 3 into the bottom side of the tank 10 and sink downward for a second washing between tube 9 and double-walled tube 3. Cleaned water that flows upward to the tank 10 is used for this second washing, wherein the contamination is carried away with the used water via outlet 11. The sand flows back onto the top of the sand bed 2.

It will be apparent from the above description of the operation that the sand bed makes a continuous downward movement because it is carried away at the bottom by the air transport pump formed by double-walled tube 3 and supplied at the top from the jacket 9. The filter bed can thus be used continuously because it is also continuously cleaned. The degree of speed with which the filter bed sinks determines the cleaning value of the device.

The sinking speed of filter bed 2 is measured using a measuring device, which is generally designated with the numeral 20.

The measuring appliance is provided here with a downward directed elongate body in the form of a rod 21, which is held fixedly in a guide 21'. A sensor 22 is arranged at the top end.

Detection of for example the sinking speed is used to adapt the resistance in the washing device 9. For this purpose the signal from the sensor is used to actuate a motor 23 which, for instance with a pinion 24 and a gear rack 25, can cause the tank 10 with the outer jacket 9 of the washing device to move up and downward.

Since the washing device consists of a double-walled tube, wherein the inner side thereof is provided in each case with ribs which are mutually offset, see fig. 4, a meander-like passage is created. By moving the ribs more or less towards each other, by adjusting the outer jacket, the passage is changed and the resistance can be determined therewith.

When setting a low sinking speed of the filter material the motor will adjust the jacket such that the passage is made smaller and the resistance increased, whereby little washing water is required. This can achieve large savings in washing water.

## Claims

1. Device for filtering a contaminated liquid, such as industrial waste water or groundwater, comprising a standing vessel (1), the lower part of which has a downward narrowing inner wall, which vessel (1) serves to receive a filter bed (2), for instance in the form of a sand bed, in addition to a pump tube (3) which stands in the filter bed (2) and has arranged therein a stand pipe fed with a gaseous medium such as air, a screen (8) coupled to the pump tube (3) and lying in the filter bed and having a peripheral edge ending at a distance from the inner wall of the vessel, and a tube assembly (4) debouching above the screen for supplying the water for filtering, **characterized in that** the pump tube (3) is provided with two groups (14, 15) of centering members which are arranged one above the other and which support on the inclining inner wall of the lower part of the vessel (1), said upper group of centering members (14) are coupled to the screen (8).

2. Device as claimed in claim 1, **characterized in that** the lower group of centering members (15) are formed by rods (36) such as screw spindles, with lengths which can be changed.

3. Device as claimed in claim 1, **characterized in that** the lower narrowing part (1') of the vessel (1) is adjustable (30, 31, 33) transversely to the standing longitudinal axis of the vessel (1).

4. Device as claimed in any of the foregoing claims, wherein the stand pipe of the pump carries a washing device (9) for washing the filter material carried upward by the pump, **characterized in that** the washing device (9) is fixedly connected to the upper portion of the vessel (1).

5. Device as claimed in any of the claims 1-4, **characterized in that** the stand pipe is adjustable in radial sense (P1) relative to the pump tube (3) by rotating said stand pipe with respect to the outer pump tube (3).

6. Device as claimed in claim 5, **characterized in that** the lower portion of the stand pipe is mounted in a rotatable eccentric ring-member round the stand pipe and supported in the pump tube (3) in order to obtain radial adjustment by rotating said ring-member.

## Patentansprüche

1. Filtervorrichtung für eine kontaminierte Flüssigkeit, wie z. B. Industrieabwasser oder Grundwasser, mit einem stehenden Behälter (1), dessen unterer Teil eine sich nach unten verengende innere Wandung hat und welcher zur Aufnahme eines Filterbetts (2) dient, z. B. in der Form eines Sandbettes, zusätzlich zu einem Pumprohr (3), welches im Filterbett (2) steht und in welchem ein Standrohr angeordnet ist, dem ein gasförmiges Medium wie z. B. Luft zugeführt wird, einem Schirm (8), der mit dem Pumprohr (3) verbunden ist und im Filterbett liegt und dessen periphere Kante in einem Abstand von der Innenwandung des Gefäßes endet, und einer Rohranordnung (4), die oberhalb des Schirmes einmündet, um das Wasser für das Filtern zuzuführen, dadurch **gekennzeichnet,** daß das Pumprohr (3) mit zwei Gruppen (14, 15) von Zentrierteilen versehen ist, welche übereinander angeordnet sind und sich auf der schrägen inneren Wandung des unteren Teils des Gefäßes (1) abstützen, wobei die Gruppe von Zentrierteilen (14) mit dem Schirm (8) verbunden ist.

2. Filtervorrichtung nach Anspruch 1, dadurch **gekennzeichnet,** daß die untere Gruppe der Zentrierteile (15) durch Stäbe (36) wie z. B. Gewindespindeln gebildet ist, deren Länge geändert werden kann.

3. Filtervorrichtung nach Anspruch 1, dadurch **gekennzeichnet,** daß der untere, sich verengende Teil (1') des Gefäßes (1) quer zur stehenden Längsachse des Gefäßes (1) einstellbar (30, 31, 33) ist.

4. Filtervorrichtung nach einem der vorangehenden Ansprüche, wobei das Standrohr der Pumpe eine Waschvorrichtung (9) trägt, zum Waschen des Filtermaterials, das von der Pumpe nach oben getragen wird, dadurch **gekennzeichnet,** daß die Waschvorrichtung (9) fest mit dem oberen Teil des Gefäßes (1) verbunden ist.

5. Filtervorrichtung nach einem der Ansprüche 1 bis 4, dadurch **gekennzeichnet,** daß das Standrohr in radialer Richtung (P1) relativ zum Pumprohr (3) einstellbar ist durch Drehen des Standrohres bezüglich des äußeren Pumprohres (3).

6. Filtervorrichtung nach Anspruch 5, dadurch **gekennzeichnet,** daß der untere Teil des Standrohres in einem drehbaren exzentrischen Ringteil um das Standrohr befestigt ist und sich in dem Pumprohr (3) abstützt, um eine radiale Einstellung durch Drehen des Ringteils zu erzielen.

## Revendications

1. Dispositif destiné à filtrer un liquide contaminé, tel que des eaux industrielles résiduelles ou des eaux souterraines, comprenant une cuve verticale (1), dont la partie inférieure présente une paroi intérieure se rétrécissant en direction du bas, cuve (1) qui sert à recevoir un lit filtrant (2), se présentant par exemple sous la forme d'un lit de sable, ainsi qu'un tube de pompage (3) qui est placé à l'intérieur du lit filtrant (2) et dans lequel est monté un tuyau vertical alimenté avec un milieu gazeux tel que de l'air, un tamis (8) couplé au tube (3) et reposant dans le lit filtrant et présentant un bord périphérique se terminant à une certaine distance de la paroi intérieure de la cuve, et un ensemble de tubes (4) débouchant au-dessus du tamis pour fournir l'eau destinée au filtrage, caractérisé en ce que le tube de pompage (3) est pourvu de deux groupes (14, 15) d'éléments de centrage qui sont disposés l'un au-dessus de l'autre et qui s'appuient sur la paroi intérieure inclinée de la partie inférieure de la cuve (1), le groupe supérieur d'éléments de centrage (14) étant couplé au tamis (8).

2. Dispositif selon la revendication 1, caractérisé en ce que les éléments de centrage (15) du groupe inférieur sont formés par des tiges (36), telles que des tiges filetées, dont les longueurs peuvent être modifiées.

3. Dispositif selon la revendication 1, caractérisé en ce que la partie inférieure rétrécie (1') de la cuve (1) est susceptible d'être ajustée (30, 31, 33) perpendiculairement à l'axe longitudinal vertical de la cuve (1).

4. Dispositif selon l'une quelconque des revendications précédentes, dans lequel le tuyau vertical de la pompe porte un dispositif de lavage (9) destiné à laver le matériau filtrant porté en direction du haut par la pompe, caractérisé en ce que le dispositif de lavage (9) est relié fixement à la portion supérieure de la cuve (1).

5. Dispositif selon l'une quelconque des revendications 1-4, caractérisé en ce que le tuyau vertical est réglable en direction radiale (P1) par rapport au tube de pompage (3), en faisant tourner le tuyau vertical par rapport au tube de pompage (3) extérieur.

6. Dispositif selon la revendication 5, caractérisé en ce que la partie inférieure du tuyau vertical est montée dans un élément annulaire excentrique rotatif, autour du tuyau vertical, et supportée dans le tube de pompage (3) afin d'obtenir un réglage radial en faisant tourner l'élément annulaire.
